# EUROPEAN PATENT SPECIFICATION

(11) **EP 2 998 238 B1**
(45) Date of publication and mention of the grant of the patent: **28.08.2019**
(21) Application number: 13884562.3
(22) Date of filing: 17.07.2013
(51) Int. Cl.: B65D 61/00, B65D 90/00, B65D 85/66

(54) **SUPPORTING STRUCTURE FOR STORAGE AND TRANSPORTATION CONTAINERS AND LOADING-TRANSPORTING METHOD THEREWITH**
TRAGESTRUKTUR FÜR LAGER- UND FÖRDERBEHÄLTER SOWIE LADE- UND FÖRDERVERFAHREN DAMIT
STRUCTURE DE SUPPORT POUR CONTENEURS DE STOCKAGE ET DE TRANSPORT ET PROCÉDÉ DE CHARGEMENT ET DE TRANSPORT UTILISANT UNE TELLE STRUCTURE

(30) Priority: 14.05.2013 CN 201310178991
(43) Date of publication of application: 23.03.2016
(73) Proprietor: Nantong Cimc Tank Equipment Co., Ltd., Jiangsu 226003 (CN); China International Marine Containers (Group) Ltd., Guangdong 518000 (CN); CIMC Enric Investment Holdings (Shenzhen) Co., Ltd., Shekou Shenzhen, Guangdong 518000 (CN)
(72) Inventor: QIAN, Yuliang, Nantong Jiangsu 226003 (CN); QUAN, Huanghe, Nantong Jiangsu 226003 (CN)
(74) Representative: Potter Clarkson
(86) International application number: PCT/CN2013/079542
(87) International publication number: WO 2014/183335

(56) References cited:
- EP-A1- 0 043 253
- EP-A1- 0 941 945
- CN-U- 201 890 446
- CN-U- 202 687 058
- CN-U- 203 319 057
- DE-U1-202010 007 123
- ES-U- 1 053 480
- JP-A- 2000 153 732
- JP-A- 2001 278 379
- US-A- 2 958 492
- US-A- 3 753 407
- US-A- 5 777 343

## Description

### Technical Field

The disclosure relates to the field of container, and specifically to a supporting structure for storage and transport containers for achieving containerization transportation and a loading-transporting method for storage and transport containers.

### Background

Nuclear fuel, such as uranium hexafluoride, is generally stored in a specific steel bottle vessel due to its radioactivity. As containerization transportation is becoming increasingly mature and due to its advantages on the transportation, frame boxes or traditional boxes are generally adopted for containerization transportation of storage and transport container of nuclear fuel to increase freight capacity, reduce freight charge and facilitate integration of sea and land transport. However, due to space limit of the traditional boxes, a single box can only load and transport three steel bottle vessels of uranic fluoride, causing lower space utilization. With respect to the frame box, a single box is capable of loading and transporting six steel bottle vessels of 48-series uranium hexafluoride, however it takes more than three times of transportation cost due to its specialty compared to traditional boxes.
JP 2000 153732 discloses a loading method for transporting two pipes on a load-carrying platform while securing them so as to prevent sideways slip. The first pipe is placed in a corner of the load-carrying platform, and the second pipe is secured by fixing blocks of a frame provided on the load carrying platform, so that it is positioned diagonally with respect to the first pipe.
ES 1 053 480 discloses a load-carrying platform which enables two sets of barrels to be transported side by side.

Therefore, in order to reduce the transportation cost of steel bottle vessels of uranium hexafluoride, it's urgent to develop a new transportation structure and method of fuel vessels to overcome the above disadvantages known in the art.

### Summary

Considering the above problems, the present disclosure proposes a supporting structure for storage and transport containers, which facilitate containerization transportation, and can solve problems of high transportation cost of storage and transport containers of nuclear fuel, and problems of obstructing products circulation and transportation.

In order to solve the above problems, the present disclosure proposes a supporting structure for storage and transport containers for achieving containerization transportation according to claim 1. The supporting structure comprises a base frame, a first frame support and a second frame support disposed on the base frame. The first frame support comprises at least two groups of first supporting beams arranged in a longitudinal direction and first arc-shaped supporting plates disposed on each group of first supporting beams. The groups of first supporting beams are parallel and spaced with each other, and each group of first supporting beams comprises at least two first transverse supporting beams arranged in transverse direction, parallel with each other and having different heights. Each first arc-shaped supporting plate is connected to the at least two first transverse supporting beams in the same group. The second frame support comprises at least two groups of second supporting beams arranged in a longitudinal direction and second arc-shaped supporting plates disposed on each group of second supporting beams. The groups of second supporting beams are parallel and spaced with each other, and each group of second supporting beams comprises at least two second transverse supporting beams arranged in the transverse direction, parallel with each other and having different heights. Each second arc-shaped supporting plate is connected to the at least two second transverse supporting beams in the same group. The first frame support is higher than the second frame support. A height in the transverse direction of the at least two first transverse supporting beams located in the same group is gradually decreased from outside to inside of the supporting structure, and a height in the transverse direction of the at least two second transverse supporting beams located in the same group is gradually decreased from outside to inside of the supporting structure. The first arc-shaped supporting plate in each group of first supporting beams is higher than the second arc-shaped supporting plate in each group of second support beams to allow a center of a first container disposed on the first arc-shaped supporting plates to be stagger-disposed from that of a second container disposed on the second arc-shaped supporting plates.

The first frame support may further comprise a transverse straining beam connecting two adjacent first transverse supporting beams in each group of first supporting beams.

The first frame support may further comprise an inclined straining beam connecting two adjacent first transverse supporting beams in each group of first supporting beams and forming an oblique angle with the two adjacent transverse supporting beams in each group of first supporting beams.

The first frame support may further comprise a stiffening beam connecting the first supporting beams in different groups.

The first frame support and the second frame support may be arranged on both sides of a longitudinal center line of the base frame.

The base frame may comprise a plurality of bottom longitudinal beams extending along the longitudinal direction and a plurality of bottom transverse beams extending along the transverse direction. The bottom longitudinal beams are perpendicularly cross-connected with the bottom transverse beams. Fork pockets are formed between two adjacent bottom longitudinal beams to fit with prongs of a forklift.

A respective arc-shaped sliding plate may further be disposed at one end of each bottom longitudinal beam to fit with the forklift.

The disclosure also provides a loading-transporting method for storage and transport containers according to claim 8, comprising the following steps:
1: providing a supporting structure for storage and transport containers as above;
S2: positioning one storage and transport container on the first arc-shaped supporting plates, while positioning another on the second arc-shaped supporting plates, wherein the two storage and transport containers are stagger-positioned, allowing stiffening rings of the two storage and transport containers spaced in a front and back direction, and allowing lifting lugs of the two storage and transport containers obliquely spaced with each other;
S3: binding the two storage and transport containers with a tightening means and then securing them on the supporting structure;
S4: putting the supporting structure and the storage and transport containers secured on the supporting structure into a container by a forklift.

With respect to the loading-transporting method the container may be a box having a length of 12.192 meters (40 feet), three of the supporting structures are positioned in the container in a length direction, and the adjacent two groups of the first frame support and the second frame support are stagger-positioned.

In the present disclosure, the location of the supporting structures is reasonably arranged in the container, allowing a single 12.192 metres (40-foot) traditional box capable of loading 6 storage and transport containers, which improves loading capacity of the container and reduces transportation cost.

In addition, the present supporting structure facilitates assembly and disassembly, can applicable to a large variety of assembly and disassembly tools, and greatly improves efficiency of assembly and disassembly.

In addition, the cooperating-use of the tightening means ensures safety during the transportation process.

### Brief Description of the Drawings

Fig. 1 is a stereoscopic structural schematic view of the supporting structure for storage and transport containers according to the present disclosure.
Fig. 2 is a front-side schematic view of Fig.1.
Fig. 3 is a left-side schematic view of Fig. 1.
Fig. 4 is a flow chart of the loading-transporting method for storage and transport containers according to the present disclosure.
Fig. 5 is a structural schematic view when the storage and transport containers are supported by the supporting structure according to the present disclosure.
Fig. 6 is a structural schematic view when the supporting structure and the storage and transport containers are loaded into the container according to the present disclosure.

### Detailed Description of the Disclosure

In order to further explain the principle and structure of the present disclosure, the preferred embodiments of the present disclosure will be illustrated in detail in combination with the accompanying drawings.

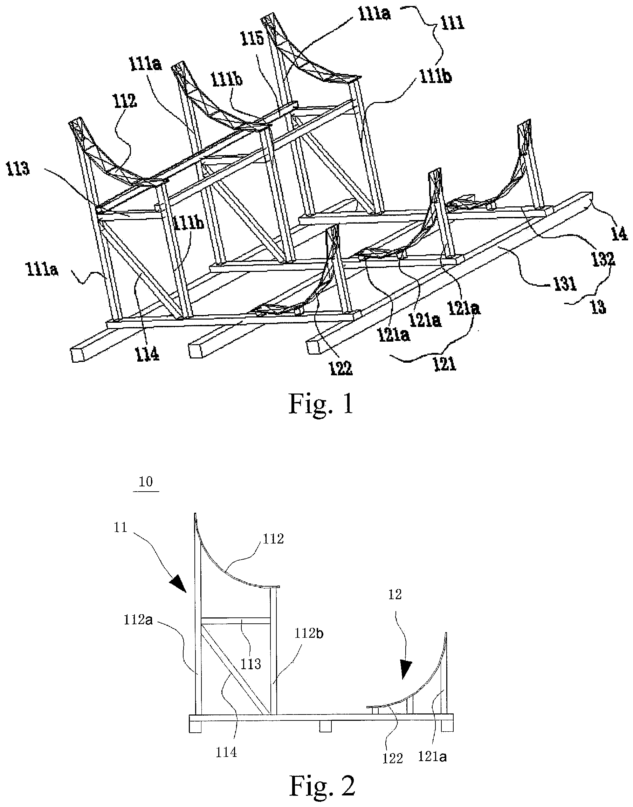

As shown in Figs. 1-3, the supporting structure 10 for storage and transport containers of the present disclosure for achieving containerization transportation comprises a base frame 13, a first frame support 11 and a second frame support 12 disposed on the base frame 13.

The base frame 13 comprises a plurality of bottom longitudinal beams 131 extending along the longitudinal direction and a plurality of bottom transverse beams 132 extending along the transverse direction. The bottom longitudinal beams 131 are perpendicularly cross-connected with the bottom transverse beams 132. Fork pockets are formed between two adjacent bottom longitudinal beams 131 to fit with prongs of a forklift. Moreover, an arc-shaped plate 14 is disposed at one end of the bottom longitudinal beam 131 to fit with the forklift and is used for reducing frictional force caused during the pulling and pushing by the forklift. The first frame support 11 comprises three groups of first supporting beams 111 secured on the bottom transverse beams 132 and arranged in a longitudinal direction, the groups of first supporting beams 111 are parallel and spaced with each other. Each group of first supporting beams 111 comprises a first transverse supporting beam 111a, a first transverse supporting beam 111b arranged in a transverse direction, and the height of the first transverse supporting beam 111a is higher than that of the first transverse supporting beam 111b. An arc-shaped supporting plate 112 for carrying the storage and transport container is disposed correspondingly on each group of the first supporting beams 111, and the first arc-shaped supporting plates 112 in different groups are parallel with each other and have the same height. The arc-shaped supporting plate 112 connects two first transverse supporting beams 111a, 111b in the same group and is secured on the top end of the first transverse supporting beams 111a, 111b, forming arc-shaped supporting surface with a higher left and a lower right.

In addition, in order to reinforce supporting intensity of the supporting structure 10 and enhance its stability, a transverse straining beam 113 is preferably disposed between two adjacent first transverse supporting beams (i.e. between the first transverse supporting beam 111a and the first transverse supporting beam 111b) in the same group.

In addition, in order to further reinforce supporting intensity of the supporting structure 10 and enhance its stability, an inclined straining beam 114 is preferably disposed between two adjacent first transverse supporting beams (i.e. between the first transverse supporting beam 111a and the first transverse supporting beam 111b) in the same group. The inclined straining beam 114 is located under the transverse straining beam 113, its two ends are respectively secured on the first transverse supporting beams 111a and 111b, and form an inclined angle with the first transverse supporting beams 111a and 111b. The top end of the inclined straining beam 114 is welded at the right angle formed between the transverse straining beam 113 and the first transverse supporting beam 111a, while the lower end is welded at the right angle formed between the bottom transverse beam 132 and the first transverse supporting beam 111b. Of course, it is not limited to the above embodiments. The top end of the inclined straining beam 114 may be welded at the right angle formed between the transverse straining beam 113 and the first transverse supporting beam 111b, while the lower end may be welded at the right angle formed between the bottom transverse beam 132 and the first transverse supporting beam 111a.

In addition, in order to reinforce connection between the first transverse supporting beams 111 in different groups, a stiffening beam 115 is preferably disposed between the first transverse supporting beams 111a (or between the first transverse supporting beams 111b) in different groups to allow the first supporting beams 111 in different groups to be integrated together.

The second frame support 12 comprises three groups of the second supporting beams 121 arranged in a longitudinal direction, and the second arc-shaped supporting plates 122 correspondingly disposed on each group of the second supporting beams 121 for carrying the storage and transport container. The groups of the second supporting beams 121 are parallel and spaced with each other, and disposed on the different bottom transverse beams 132. Each group of the second supporting beams 121 comprises a plurality of the second transverse supporting beams 121a arranged in a transverse direction, the plurality of the transverse supporting beams 121a are parallel with each other and have different heights, the heights is gradually decreased from outside to inside of the supporting structure 10 in a transverse direction. The second arc-shaped supporting plate 122 is connected with a plurality of second transverse supporting beams 121a and secured on the top end of these second transverse supporting beams 121a, forming arc-shaped supporting surface with a higher left and a lower right. The second arc-shaped supporting beams 122 in different groups are parallel with each other and have the same height.

As shown in Fig. 1, the first frame support 11 and the second frame support 12 are arranged on both sides of a longitudinal center line (i.e. an extending direction along the middle bottom longitudinal beam of Fig. 1) of the base frame 13 respectively, and the first supporting beam 111 and the second supporting beam 121 in the same group of are secured on the same bottom transverse beam 132. The first frame support 11 is higher than the second frame support 12, allowing the first arc-shaped supporting plate 112 being higher than the second arc-shaped supporting plate 122 to allow center of the storage and transport container disposed on the first arc-shaped supporting plate 112 departing from that of the storage and transport container disposed on the second arc-shaped supporting plate 122. Both of them are stagger-disposed to maximize loading capability of the supporting structure.

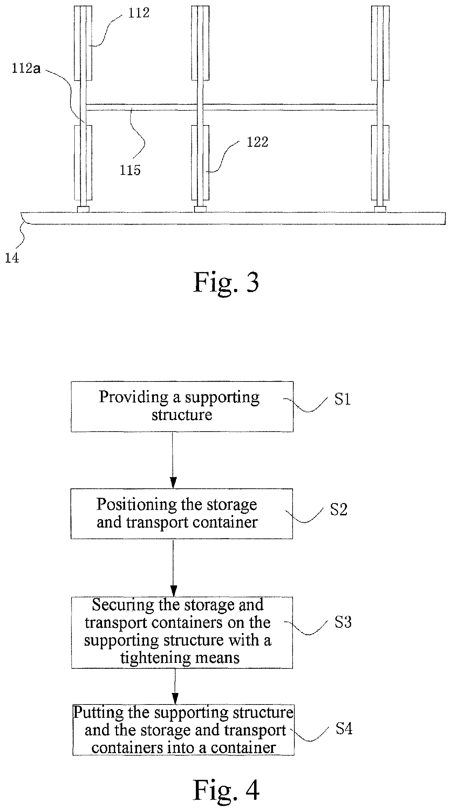

The disclosure also provides a method for achieving containerization transportation utilizing the above supporting structure to load and transport the storage and transport containers. The loading-transporting method of storage and transport container is illustrated in detail below, combined with Fig. 4.

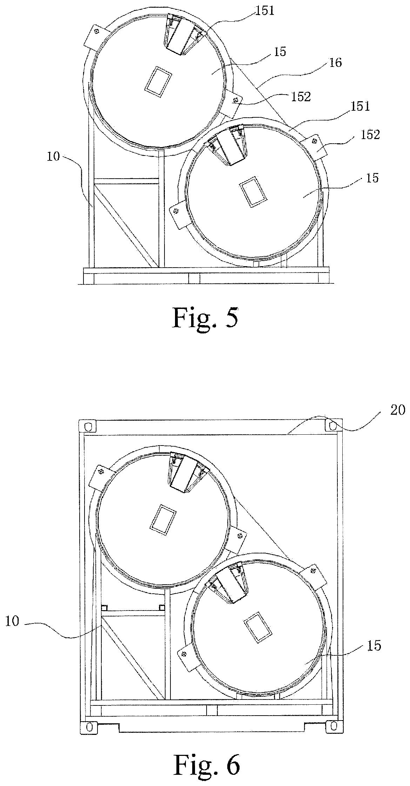

The loading-transporting method for storage and transport containers comprises the following steps:
S1: providing a supporting structure as above;
S2: as shown in Fig. 5 , positioning one storage and transport container 15 on the first arc-shaped supporting plate of the supporting structure 10, while positioning another on the second arc-shaped supporting plate of the supporting structure 10, wherein the two storage and transport containers 15 are stagger-positioned, allowing stiffening rings 151 of the two storage and transport containers 15 also staggered in a front and back direction, and lifting lugs 152 of the two storage and transport containers obliquely staggered, so as to avoid mutual interference between stiffening rings 151 and lifting lugs 152 and space occupation;
S3: binding the two storage and transport containers 15 with a tightening means 16 and then securing them on the supporting structure 10, wherein the tightening means 16 may be a tightening belt;
S4: putting the supporting structure 10 assembled according to the steps S1 to S3 and the storage and transport containers 15 into an internal specified position of a container 20 by the forklift, as shown in Fig. 6.

In addition, when the supporting structure 10 is lifted by the forklift, it should be noted that: prongs of the forklift should be departed from the length center of the storage and transport container 15, and close to one end of the sliding plate of the bottom longitudinal beam, allowing the barycenter of the storage and transport containers 20 on the supporting structure 10 situated on the prongs to prevent from cocking and overturning of one end during fork-lifting process of the forklift, so as to allow the forklift lifting the supporting structure 10 successfully.

The container 20 in this embodiment is a traditional box with 12.192 metres (40 feet), three of the supporting structures 10 may be positioned in a single container 20 in a length direction.
When the supporting structure 10 is loaded into the container 20, the adjacent two groups of the first frame supports and the second frame supports of the supporting structure 10 are staggered, i.e. the adjacent two groups of the supporting structure 10 are alternate in the left and right position, that is to say, if the preceding group is stacked in a stacking mode of higher left and lower right, the subsequent group should be stacked in a stacking mode of lower left and higher right, so as to avoid the barycenter tilting to one side during tilting of the container 20.

Above all, in the present disclosure, a single traditional box with 12.192 meters (40 feet) may be capable of loading 6 storage and transport containers (e.g. 48-series vessel of uranium hexafluoride (UF6)) by disposing the supporting structure with different heights of right and left to support the storage and transport containers, and by reasonably arranging positions of the supporting structure in the container. This improves loading capability of the container and reduces transportation cost. Moreover, the cooperating-use of the tightening means ensures safety during the transportation process. In addition, the present supporting structure facilitates assembly and disassembly, has broad applicability for assembly and disassembly tools, and greatly improves efficiency of assembly and disassembly.

In addition, the storage and transport container of the present disclosure may comprise steel bottle vessel for loading and transporting nuclear fuel, or other vessels with similar shapes.

Moreover, in the above embodiment, the base frame comprises three bottom longitudinal beams, however it is not limited the above embodiments. The bottom longitudinal beam may be four or more.

In addition, in the above embodiment, the first frame support comprises three groups of the first supporting beams, however it is not limited the above embodiments. Two, four or more groups of the first supporting beams may be disposed on the first frame support in a longitudinal direction. Similarly, the first arc-shaped supporting plate disposed on the first supporting beam is changed as the number of the first supporting beams.

In addition, in the above embodiment, the first supporting beams in the same group comprise two first transverse supporting beams, however it is not limited to this embodiment. The first supporting beams in the same group may comprise more than two first transverse supporting beams, wherein the heights of first transverse supporting beams are unequal, the heights is gradually decreased from outside to inside of the supporting structure in a transverse direction.

In addition, in the above embodiment, the second frame support comprises three groups of the second supporting beams, however it is not limited to this embodiment. Two, four or more groups of the first supporting beams may be disposed on the first frame support in a longitudinal direction. Similarly, the first arc-shaped supporting plate disposed on the second supporting beam is changed as the number of the second supporting beam.

The above embodiments are only the preferred embodiments of the present disclosure, and do not limit the protection scope of the present disclosure. Any conversions, or direct or indirect utilities into other relative technical fields, using equivalent structure or procedure made by the description and accompanying drawings of the present disclosure, are also included within the patent protection scope of the present disclosure defined in the appended claims.

## Claims

1. A supporting structure (10) for storage and transport containers for achieving containerization transportation, comprising:
a base frame (13), a first frame support (11) and a second frame support (12) disposed on the base frame (13),
wherein the first frame support (11) comprises:
at least two groups of first supporting beams (111) arranged in a longitudinal direction; and
first arc-shaped supporting plates (112) disposed on each group of first supporting beams,
wherein the groups of first supporting beams are parallel and spaced with each other, and each group of first supporting beams comprises at least two first transverse supporting beams (111a, 111b), wherein the at least two first transverse supporting beams (111a, 111b) in the same group are arranged in a transverse direction, parallel with each other and having different heights, each first arc-shaped supporting plate (112) being connected to the at least two first transverse supporting beams (111a, 111b) in the same group;
wherein the second frame support (12) comprises:
at least two groups of second supporting beams (121) arranged in a longitudinal direction; and
second arc-shaped supporting plates (122) disposed on each group of second supporting beams,
wherein the groups of second supporting beams (121) are parallel and spaced with each other, and each group of second supporting beams (121) comprises at least two second transverse supporting beams (121a), wherein the at least two second transverse supporting beams (121a) in the same group are arranged in the transverse direction, parallel with each other and having different heights, each second arc-shaped supporting plate (122) being connected to the at least two second transverse supporting beams (121a) in the same group;
wherein the first frame support (11) is higher than the second frame support (12),
wherein a height in the transverse direction of the at least two first transverse supporting beams (111a, 111b) located in the same group is gradually decreased from outside to inside of the supporting structure, and a height in the transverse direction of the at least two second transverse supporting beams (121a) located in the same group is gradually decreased from outside to inside of the supporting structure, such that the first arc-shaped supporting plate (112) in each group of first supporting beams is higher than the second arc-shaped supporting plate (122) in each group of second support beams to allow a center of a first container disposed on the first arc-shaped supporting plates (112) to be stagger-disposed from that of a second container disposed on the second arc-shaped supporting plates (122).

2. The supporting structure (10) according to claim 1, wherein the first frame support (11) further comprises a transverse straining beam (113) connecting the two adjacent first transverse supporting beams (111a, 111b) in each group of first supporting beams (11).

3. The supporting structure (10) according to claim 1, wherein the first frame support (11) further comprises an inclined straining beam (114) connecting the two adjacent first transverse supporting beams (111a, 111b) in each group of first supporting beams (11) and forming an oblique angle with the two adjacent transverse supporting beams in each group of first supporting beams (11).

4. The supporting structure (10) according to claim 1, wherein the first frame support (11) further comprises a stiffening beam (115) connecting the first supporting beams (111) in different groups.

5. The supporting structure according to claim 1, wherein the first frame support and the second frame support are arranged on both sides of a longitudinal center line of the base frame respectively.

6. The supporting structure (10) according to claim 1, wherein the base frame (13) comprises a plurality of bottom longitudinal beams extending along the longitudinal direction and a plurality of bottom transverse beams (132) extending along the transverse direction, the bottom longitudinal beams are perpendicularly cross-connected with the bottom transverse beams (132), fork pockets are formed between two adjacent bottom longitudinal beams to fit with prongs of a forklift.

7. The supporting structure (10) according to claim 6, wherein a respective arc-shaped sliding plate (14) is disposed at one end of each bottom longitudinal beam to fit with the forklift.

8. A loading-transporting method for storage and transport containers, comprising:
S1: providing a supporting structure (10) according to any one of claims 1 to 7;
S2: positioning one storage and transport container (15) on the first arc-shaped supporting plates, and positioning another on the second arc-shaped supporting plates, wherein these two storage and transport containers (15) are stagger-positioned, allowing stiffening rings of the two storage and transport containers (15) staggered in a front and back direction, and lifting lugs of the two storage and transport containers (15) obliquely staggered with each other;
S3: binding the two storage and transport containers with a tightening means (16) and then securing them on the supporting structure (10);
S4: putting the supporting structure (10) and the two storage and transport containers (15) secured on the supporting structure (10) into a container (20) by a forklift.

9. The loading-transporting method according to claim 8, wherein the container (20) is a box having a length of 12.192 metres (40 feet), three of the supporting structures (10) are positioned in the container in a length direction, and the adjacent two groups of the first frame support (11) and the second frame support (12) are stagger-positioned.

## Patentansprüche

1. Trägerstruktur (10) für Lager- und Transportcontainer zum Erzielen eines Containertransports, umfassend:
einen Grundrahmen (13), einen ersten Rahmenträger (11) und einen zweiten Rahmenträger (12), welche auf dem Grundrahmen (13) angeordnet sind, wobei der erste Rahmenträger (11) Folgendes umfasst:
mindestens zwei Gruppen von ersten Trägerbalken (111), welche in einer Längsrichtung angeordnet sind; und
erste bogenförmige Trägerplatten (112), die auf jeder Gruppe von ersten Trägerbalken angeordnet sind, wobei die Gruppen von ersten Trägerbalken parallel und voneinander beabstandet sind und jede Gruppe von ersten Trägerbalken mindestens zwei erste Querträgerbalken (111a, 111b) umfasst, wobei die mindestens zwei ersten Querträgerbalken (111a, 111b) derselben Gruppe in einer Querrichtung parallel zueinander und in unterschiedlicher Höhe angeordnet sind, wobei jede erste bogenförmige Trägerplatte (112) mit den mindestens zwei ersten Querträgerbalken (111a, 111b) in der gleichen Gruppe verbunden ist;
wobei der zweite Rahmenträger (12) Folgendes umfasst:
mindestens zwei Gruppen von zweiten Trägerbalken (121), welche in Längsrichtung angeordnet sind; und
zweite bogenförmige Trägerplatten (122), die auf jeder Gruppe von zweiten Trägerbalken angeordnet sind, wobei die Gruppen von zweiten Trägerbalken (121) parallel und voneinander beabstandet sind und jede Gruppe von zweiten Trägerbalken (121) mindestens zwei zweite Querträgerbalken (121a) umfasst, wobei die mindestens zwei ersten Querträgerbalken (121a) derselben Gruppe in einer Querrichtung parallel zueinander und in unterschiedlicher Höhe angeordnet sind, wobei jede zweite bogenförmige Trägerplatte (122) mit den mindestens zwei zweiten Querträgerbalken (121a) in der gleichen Gruppe verbunden ist;
wobei der erste Rahmenträger (11) höher ist als der zweite Rahmenträger (12), wobei eine Höhe in Querrichtung der mindestens zwei ersten Querträgerbalken (111a, 111b), die in der gleichen Gruppe angeordnet sind, allmählich von der Außenseite zu der Innenseite der Trägerstruktur abnimmt und eine Höhe in der Querrichtung der mindestens zwei zweiten Querträgerbalken (121a), die in der gleichen Gruppe angeordnet sind, von der Außenseite zu der Innenseite der Trägerstruktur abnimmt, sodass die erste bogenförmige Trägerplatte (112) in jeder Gruppe von ersten Trägerbalken höher ist als die zweite bogenförmige Trägerplatte (122) in jeder Gruppe von zweiten Trägerbalken, damit eine Mitte eines ersten Containers, welcher auf den ersten bogenförmigen Trägerplatten (112) angeordnet ist, von einem zweiten Container, der auf den zweiten bogenförmigen Trägerplatten (122) angeordnet ist, versetzt angeordnet sein kann.

2. Trägerstruktur (10) nach Anspruch 1, wobei der erste Rahmenträger (11) ferner einen Querträgerbalken (113) umfasst, welcher die beiden benachbarten ersten Querträgerbalken (111a, 111b) in jeder Gruppe von ersten Trägerbalken (11) verbindet.

3. Trägerstruktur (10) nach Anspruch 1, wobei der erste Rahmenträger (11) ferner einen geneigten Spannbalken (114) umfasst, welcher die beiden benachbarten ersten Querträgerbalken (111a, 111b) in jeder Gruppe erster Trägerbalken (11) verbindet und in jeder Gruppe von ersten Trägerbalken (11) einen schrägen Winkel mit den zwei benachbarten Querträgerbalken bildet.

4. Trägerstruktur (10) nach Anspruch 1, wobei der erste Rahmenträger (11) ferner einen Versteifungsbalken (115) umfasst, der die ersten Trägerbalken (111) in verschiedenen Gruppen verbindet.

5. Trägerstruktur nach Anspruch 1, wobei der erste Rahmenträger und der zweite Rahmenträger jeweils zu beiden Seiten einer Längsmittellinie des Grundrahmens angeordnet sind.

6. Trägerstruktur (10) nach Anspruch 1, wobei der Grundrahmen (13) mehrere Längsbodenbalken, welche sich in Längsrichtung erstrecken, und mehrere Querbodenbalken (132), welche sich in Querrichtung erstrecken, aufweist, wobei die Längsbodenbalken senkrecht mit den Querbodenbalken (132) quer verbunden sind, wobei sich Gabeltaschen zwischen zwei benachbarten Längsbodenbalken bilden, um zu den Zinken eines Gabelstaplers zu passen.

7. Trägerstruktur (10) nach Anspruch 6, wobei eine entsprechende bogenförmige Gleitplatte (14) an einem Ende jedes Längsbodenbalkens angeordnet ist, um zu dem Gabelstapler zu passen.

8. Lade-Transport-Verfahren für Lager- und Transportcontainer, umfassend:
S1: Bereitstellen einer Trägerstruktur (10) nach einem der Ansprüche 1 bis 7;
S2: Anordnen eines Lager- und Transportcontainers (15) auf den ersten bogenförmigen Trägerplatten und Anordnen eines anderen auf den zweiten bogenförmigen Trägerplatten, wobei diese beiden Lager- und Transportcontainer (15) versetzt angeordnet sind, wodurch Versteifungsringe der beiden Lager- und Transportcontainer (15) in einer Vorwärts- und Rückwärtsrichtung versetzt angeordnet sind und Hebeösen der beiden Lager- und Transportcontainer (15) schräg zueinander versetzt angeordnet sind;
S3: Verbinden der beiden Lager- und Transportcontainer mit einem Spannmittel (16) und anschließend, Befestigen an der Trägerstruktur (10);
S4: Stellen der Trägerstruktur (10) und der beiden Lager- und Transportcontainer (15), die an der Trägerstruktur (10) befestigt sind, in einen Container (20) mit einem Gabelstapler.

9. Lade-Transport-Verfahren nach Anspruch 8, wobei der Container (20) ein Behälter mit einer Länge von 12,192 Metern (40 Fuß) ist, wobei drei der Trägerstrukturen (10) in Längsrichtung in dem Container angeordnet sind, und die beiden benachbarten Gruppen des ersten Rahmenträgers (11) und des zweiten Rahmenträgers (12) versetzt angeordnet sind.

## Revendications

1. Structure de support (10) destinée aux conteneurs de stockage et de transport pour réaliser le transport par conteneurisation, comprenant :
un cadre de base (13), un premier support de cadre (11) et un second support de cadre (12) disposés sur le cadre de base (13), le premier support de cadre (11) comprenant :
au moins deux groupes de premières poutres de support (111) agencées dans une direction longitudinale ; et
des premières plaques de support en forme d'arc (112) disposées sur chaque groupe de premières poutres de support, dans laquelle les groupes de premières poutres de support sont parallèles et espacés les uns des autres, et chaque groupe de premières poutres de support comprend au moins deux premières poutres de support transversales (111a, 111b), dans laquelle les au moins deux premières poutres de support transversales (111a, 111b) dans le même groupe sont disposées dans une direction transversale parallèlement les unes aux autres et ayant des hauteurs différentes, chaque première plaque de support en forme d'arc (112) étant reliée aux au moins deux premières poutres de support transversales (111a, 111b) dans le même groupe ;
dans laquelle le second support de cadre (12) comprend :
au moins deux groupes de secondes poutres de support (121) agencées dans une direction longitudinale ; et
des secondes plaques de support en forme d'arc (122) disposées sur chaque groupe de seconds poutres de support, dans laquelle les groupes de secondes poutres de support (121) sont parallèles et espacés les uns des autres, et chaque groupe de secondes poutres de support (121) comprend au moins deux des secondes poutres de support transversales (121a), dans laquelle les au moins deux secondes poutres de support transversales (121a) dans le même groupe sont disposées dans la direction transversale, parallèlement les unes aux autres et ayant des hauteurs différentes, chaque seconde plaque de support en forme d'arc (122) étant reliée aux au moins deux secondes poutres de support transversales (121a) dans le même groupe ;
dans laquelle le premier support de cadre (11) est plus élevé que le second support de cadre (12), dans laquelle une hauteur dans la direction transversale des au moins deux premières poutres de support transversales (111a, 111b) se trouvant dans le même groupe est progressivement réduite de l'extérieur vers l'intérieur de la structure de support, et une hauteur dans la direction transversale des au moins deux secondes poutres de support transversales (121a) se trouvant dans le même groupe est progressivement réduite de l'extérieur vers l'intérieur de la structure de support, de sorte que la première plaque de support en forme d'arc (112) dans chaque groupe de premières poutres de support est plus élevée que la seconde plaque de support en forme d'arc (122) dans chaque groupe de secondes poutres de support afin de permettre au centre d'un premier conteneur disposé sur les premières plaques de support en forme d'arc (112) d'être disposé de manière décalée par rapport à celui d'un second conteneur disposé sur les secondes plaques de support en forme d'arc (122).

2. Structure de support (10) selon la revendication 1, dans laquelle le premier support de cadre (11) comprend en outre une poutre de contrainte transversale (113) reliant les deux premières poutres de support transversales adjacentes (111a, 111b) dans chaque groupe de premières poutres de support (11).

3. Structure de support (10) selon la revendication 1, dans laquelle le premier support de cadre (11) comprend en outre une poutre de contrainte inclinée (114) reliant les deux premières poutres de support transversales adjacentes (111a, 111b) dans chaque groupe de premières poutres de support (11) et formant un angle oblique avec les deux supports transversaux adjacents des poutres dans chaque groupe de premières poutres de support (11).

4. Structure de support (10) selon la revendication 1, dans laquelle le premier support de cadre (11) comprend en outre une poutre de renfort (115) reliant les premières poutres de support (111) dans différents groupes.

5. Structure de support selon la revendication 1, dans laquelle le premier support de cadre et le second support de cadre sont disposés des deux côtés d'une ligne centrale longitudinale du cadre de base, respectivement.

6. Structure de support (10) selon la revendication 1, dans laquelle le cadre de base (13) comprend une pluralité de poutres longitudinales inférieures s'étendant dans la direction longitudinale et une pluralité de poutres transversales inférieures (132) s'étendant dans la direction transversale, les poutres longitudinales inférieures sont transversalement reliées de manière perpendiculaire aux poutres transversales inférieures (132), des passages de fourche sont formés entre deux poutres longitudinales inférieures adjacentes pour s'adapter aux fourches d'un chariot élévateur à fourche.

7. Structure de support (10) selon la revendication 6, dans laquelle une plaque coulissante respective en forme d'arc (14) est disposée à une extrémité de chaque poutre longitudinale inférieure pour s'adapter au chariot élévateur à fourche.

8. Procédé de chargement et de transport destiné aux conteneurs de stockage et de transport, comprenant :
S1 : la fourniture d'une structure de support (10) selon l'une quelconque des revendications 1 à 7 ;
S2 : le positionnement d'un conteneur de stockage et de transport (15) sur les premières plaques de support en forme d'arc, et le positionnement d'un autre sur les secondes plaques de support en forme d'arc, ces deux conteneurs de stockage et de transport (15) étant positionnés de manière décalée, permettant ainsi de renforcer les anneaux des deux conteneurs de stockage et de transport (15) décalés dans une direction avant et arrière, et le levage des oreilles des deux conteneurs de stockage et de transport (15) décalées de manière oblique l'un par rapport à l'autre ;
S3 : la liaison des deux conteneurs de stockage et de transport à un moyen de serrage (16), puis la fixation de ceux-ci sur la structure de support (10) ;
S4 : la mise en place de la structure de support (10) et des deux conteneurs de stockage et de transport (15) fixés sur la structure de support (10) dans un conteneur (20) par un chariot élévateur à fourche.

9. Procédé de chargement et de transport selon la revendication 8, dans lequel le conteneur (20) est une boîte ayant une longueur de 12,192 mètres (40 pieds), trois des structures de support (10) sont positionnées dans le conteneur dans le sens de la longueur, et les deux groupes adjacents du premier support de cadre (11) et du second support de cadre (12) sont positionnés de manière décalée.
